(19)

Europäisches
Patentamt
European
Patent Office
Office européen
des brevets

(11)  **EP 4 523 991 A1**

(12)  **EUROPEAN PATENT APPLICATION**

(43) Date of publication:
**19.03.2025  Bulletin 2025/12**

(21) Application number: **24199937.4**

(22) Date of filing: **12.09.2024**

(51) International Patent Classification (IPC):
**B61L 23/04** $^{(2006.01)}$      **B60M 1/28** $^{(2006.01)}$
**B61L 27/53** $^{(2022.01)}$      **B61K 9/08** $^{(2006.01)}$

(52) Cooperative Patent Classification (CPC):
**B61L 27/53; B60M 1/28; B61K 9/08; B61L 23/042**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023  IT 202300018747**

(71) Applicant: **Pisani, Giorgio
27058 Voghera (PV) (IT)**

(72) Inventor: **Pisani, Giorgio
27058 Voghera (PV) (IT)**

(74) Representative: **Porta & Consulenti Associati
S.p.A.
Via Vittoria Colonna, 4
20149 Milano (IT)**

(54)  **POSITION MEASUREMENT METHOD FOR A WIRE OF AN ELECTRICAL CONTACT LINE ASSOCIATED WITH A RAILWAY TRACK, AND RELATED POSITION MEASUREMENT SYSTEM**

(57)      A position measurement method for a wire (12) of an electrical contact line associated with a railway track (13). The method comprises: applying a measurement system (100) to a reference support (10), wherein the measurement system comprises a distance meter (102) and an inclinometer; measuring with the measurement system (100) a first distance (D1) and a first angle (β) between the reference support (10) and a portion of the railway track (13); measuring with the measurement system (100) a second distance (D2) and a second angle (γ) between the reference support (10) and the wire (12); triangulating the first distance (D1), the first angle (β), the second distance (D2) and the second angle (γ) to determine a height (f) of the wire (12) projected onto an axis perpendicular with respect to a plane of the railway track (13), and further to determine a lateral offset (e) of the wire (12) with respect to the perpendicular axis. A related position measurement system.

FIG. 4

EP 4 523 991 A1

## Description

Technical field

The present invention relates to a position measurement method for a wire of an electrical contact line associated with a railway track.

The present invention also relates to a position measurement system applicable to the measurement of a wire of an electrical contact line associated with a railway track.

In general, the present invention applies to the field of measurement by means of optical measurements, which can also be performed for tracks in operation.

The present invention, in particular, can be used effectively on electrified railway lines where tracking references consisting of so-called "topographic pins" are available.

Prior art

Document WO2008129420A2 in the name of Pisani Giorgio relates to a laser measurement method and system for checking longitudinal movements of a long welded rail, both under construction and in operation, wherein a laser distance meter is used to measure targets firmly positioned on each rail, to obtain a measurement of the reference distance between the distance meter and each target and to calculate a longitudinal displacement.

Document ITMI20130887A1 in the name of Pisani Giorgio relates to an apparatus and process for checking railway tracks, wherein the planimetric-altimetric status of the track is checked using a distance meter with inclinometer; the distance meter is attached to a nonremovable reference point from which a collimation of distances is carried out to assess a deviation of the horizontal and vertical position of the track.

The prior art solutions involving the use of a distance meter make it possible to avoid access to the track by operators and to carry out surveys from the walkway alongside the track, even in the presence of active railway traffic.

However, the prior art solutions are not fully effective because they are only configured for measurements of the planimetric-altimetric status of the track or the longitudinal movements of a long welded rail.

In particular, the prior art solutions involving the use of a distance meter do not provide position surveys for the wire of the electrical contact line associated with a track.

However, in some countries the vast majority of the railway lines are electrified, and the position survey for the wire of the electrical contact line is an important piece of information to ensure the full functionality of the line.

In general, the steady gradient segment of the contact line should reflect the steady gradient segment of the track, both in straight and curved sections of the track. In other words, the wire must have the same slope as the track, within appropriate tolerances.

In particular, typically, the wire of the contact line must remain within a lateral band of approximately ± 200 mm from the vertical on the track, and at a height whose tolerance is even narrower, determined according to the speed of the trains and the type of wire.

Checking the position of the wire is important whenever work is done on the underlying track, e.g. modifying a cross-level.

In general, the prior art is therefore not effective in relation to position surveys for the wire of the electrical contact line associated with a track.

Therefore, the prior art solutions can still be improved in certain aspects, solving technical problems thereof.

Summary of the invention

An object of the present invention is to obviate drawbacks of the prior art.

A particular object of the present invention is to provide a position measurement for the wire of the electrical contact line associated with a track.

A particular object of the present invention is to effectively verify the correct position of the wire of the contact line.

A particular object of the present invention is to avoid having to access the track for measuring a position of the wire of the contact line, thereby increasing the safety of operators and avoiding interruptions of the railway traffic.

A further particular object of the present invention is to allow for a quicker and more immediate measurement, with a result that can be readily used by operators for maintenance decisions.

A further particular object of the present invention is to enable a position measurement for the wire of the electrical contact line even under voltage conditions, without the need to disconnect the electrical power to the line.

A further particular object of the present invention is to enable even a single person to carry out check operations without interfering with the travelling of trains on the track in operation.

These and other objects are achieved by means of a position measurement method for a wire of an electrical contact line associated with a railway track, and a position measurement system according to the features of the attached claims which form an integral part of this description.

An idea underlying the present invention is to check the position of the wire of the contact line with respect to the track by triangulating distances and angles measured from a fixed reference, such as a topographic pin, using a distance meter and inclinometer. These measurements include a first measurement between the fixed reference and the track, and a second measurement between the fixed reference and the wire of the contact line.

Thus, the present invention provides for a position measurement method for a wire of an electrical contact line associated with a railway track.

The position measurement method comprises applying a measurement system to a reference support, wherein the measurement system comprises a distance meter and an inclinometer.

The position measurement method comprises measuring with the measurement system a first distance and a first angle between the reference support and a portion of the railway track.

The position measurement method comprises measuring with the measurement system a second distance and a second angle between the reference support and the wire.

The position measurement method comprises triangulating the first distance, the first angle, the second distance and the second angle to determine a height of the wire projected onto an axis perpendicular to a plane of the railway track, and further to determine a lateral offset of the wire with respect to the same perpendicular axis.

The present invention also provides for a position measurement system, configured to implement the position measurement method for a wire of an electrical contact line associated with a railway track according to the present invention.

In particular, the position measurement system comprises centering means to a reference support, a distance meter, an inclinometer, an elevation angle adjustment system with respect to a horizontal plane.

Advantageously, the present invention makes it possible to provide a position measurement of the wire of the electrical contact line associated with a track, in geometric terms of height and lateral offset from the axis perpendicular with respect to the plane of the track. The position of the wire of the electrical contact line can be advantageously expressed in different and appropriate geometric ways, e.g. vectors, starting from height and lateral offset information.

Advantageously, the present invention makes it possible to quickly and efficiently check the correct position of the wire of the contact line.

Advantageously, the present invention makes it possible to carry out a position measurement of the wire of the contact line without access to the railway tracks and without the need to disconnect electrical power to the line, thus increasing the operator safety and avoiding disruptions to the railway traffic.

Advantageously, the present invention makes it possible to obtain, by means of portable electronic processing means, an operator-usable result that can be readily used for maintenance decisions.

Advantageously, the measurement system allows even a single person, and above all without interfering with the movement of trains on the track in operation, to carry out all the control operations provided in relation to the position of the wire of the electrical contact line.

Further features and advantages will become more apparent from the detailed description below of preferred, non-limiting embodiments of the present invention, and from the dependent claims outlining preferred and particularly advantageous embodiments of the invention.

Brief description of the drawings

The invention is illustrated with reference to the following figures, provided by way of non-limiting example, wherein:

- Figure 1 shows an embodiment of a position measurement system according to the present invention, in a first operating configuration.

- Figure 2 shows the position measurement system of Figure 1 in a second operating configuration.

- Figure 3 shows a further view of the position measurement system of Figure 1.

- Figure 4 exemplifies measurements according to the position measurement method for a wire of an electrical contact line associated with a railway track, according to the present invention.

- Figure 5 exemplifies a triangulation to determine a height and lateral offset of the contact line.

- Figure 6 exemplifies further measurements according to the position measurement method for a wire of an electrical contact line wire associated with a railway track according to the present invention.

In the different figures, similar elements will be identified by similar reference numbers.

Detailed description

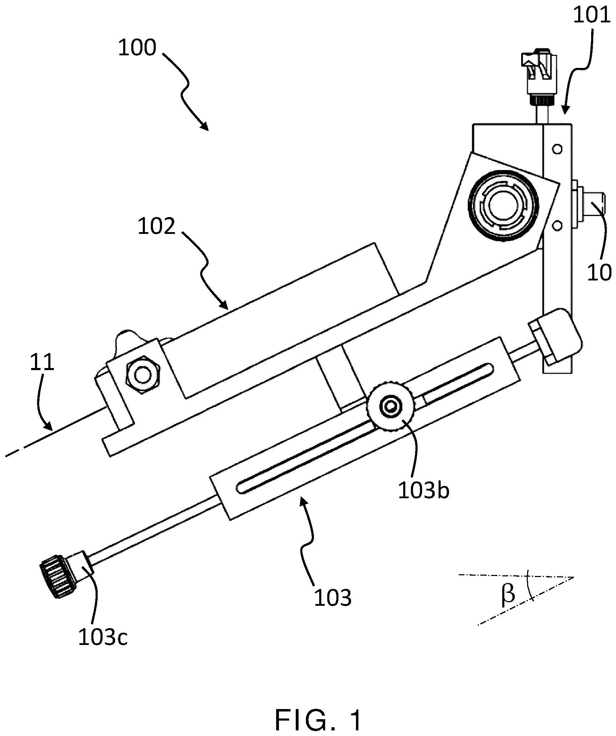

Figure 1 shows an embodiment of a position measurement system 100 according to the present invention.

In general, the position measurement system 100 is configured to implement the position measurement method for a wire of an electrical contact line associated with a railway track according to the present invention.

In the first operating configuration shown, as will be further clarified hereinafter, the position measurement system 100 is pointed towards the railway track.

The position measurement system 100 comprises centering means 101 to a reference support 10.

Preferably, the reference support 10 to which the position measurement system 100 is anchored comprises a topographic pin 10, in particular a pin 10 of the type already installed on railway lines and also used to check the planimetric-altimetric status of the track.

In a preferred embodiment, the centering means 101 comprise a front abutment vice configured for centring clamping on a lower generatrix line of a cylinder defined by the reference support or topographic pin 10. In particular, the vice comprises a substantially circular profile. The centering means 101 preferably comprise a front abutment vice which comprises an inclined profile, in particular V-shaped, configured to cooperate with the reference support or topographic pin 10 at a lower generatrix line. In a variant, an additional fixed reference such as a hole can be associated with the reference support 10 to ensure positioning of the measurement system 100 as described above. As an alternative to the topographic pin, in a less advantageous variant, it would be possible to use different fixed or movable physical supports, as a reference support for the measurement system 100.

The position measurement system 100 comprises a distance meter 102. The distance meter 102, in a preferred embodiment, comprises a lasertype light source, adapted to project a laser beam 11 that provides a point or dash on an object pointed at, which will be a portion of railway track and of wire of electrical contact line, as will be further described.

The position measurement system 100 comprises an inclinometer, preferably but not exclusively integrated in the distance meter 102; this inclinometer is adapted to measure an angle $\gamma$ or $\beta$ with respect to the horizontal.

The position measurement system 100 comprises an elevation angle adjustment system 103 with respect to a horizontal plane. The elevation angle adjustment system 103 comprises a slide mechanism comprising a first quick adjustment mechanism 103b and a second precision adjustment mechanism 103c.

In particular, the elevation angle adjustment system 103 is configured to vary an inclination of the distance meter 102 with respect to the horizontal plane, generating a plurality of laser beams inclined in space.

The position measurement system 100 can be further associated with a computerised reading device, such as a PDA or tablet or smartphone, which preferably further comprises a GPS module configured to detect a measurement position by the track.

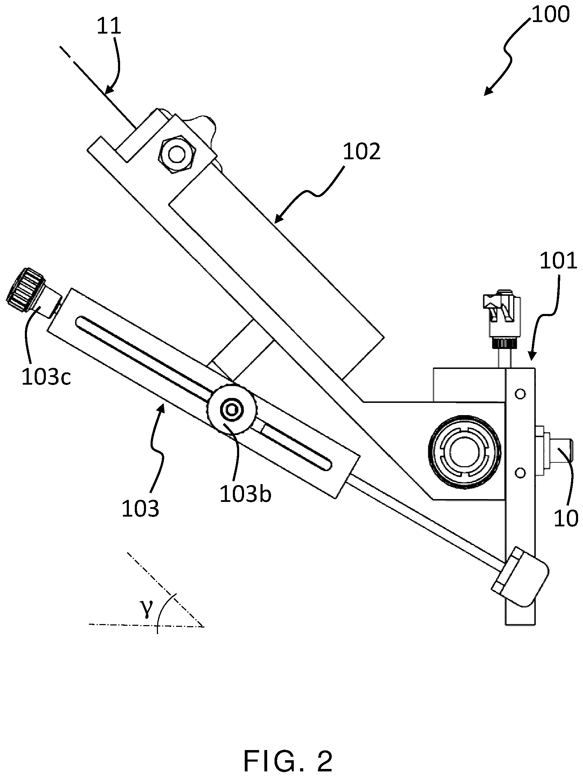

Figure 2 shows the position measurement system 100 in a second operating configuration wherein, as will be further clarified below, the position measurement system 100 is pointed towards the wire of the electrical contact line.

Thanks to the elevation angle adjustment system 103 already described, the distance meter 102 is configured to point up an angle $\beta$ from the horizontal to collimate an electrical contact line wire associated with a railway track. Thus, the position measurement system 100 is specifically configured to implement the position measurement method for the wire of the electrical contact line, which will be further described.

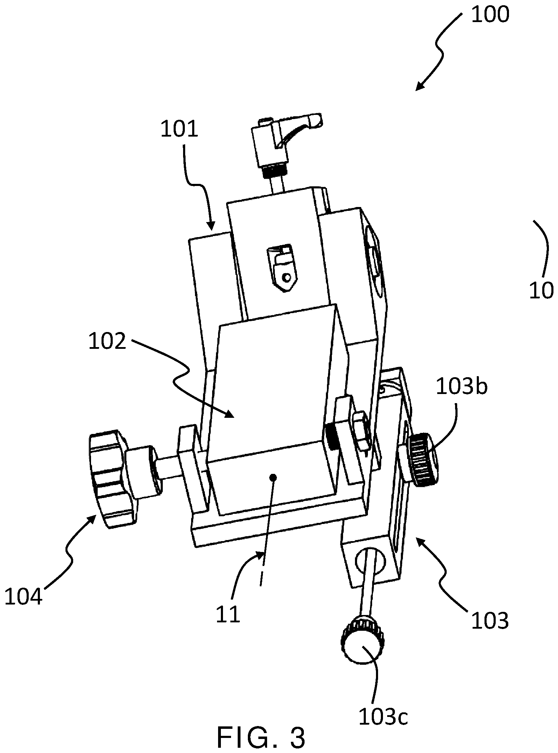

Figure 3 shows a further view of the position measurement system 100. The position measurement system 100 comprises a lateral directioning system 104 configured to fine-tune the pointing of the distance meter 102, for example by directing the laser beam onto the anchor clamp of the contact wire which may be at an offset position with respect to the pin 10.

In a preferred, non-limiting embodiment, the lateral directioning system 104 comprises a thrust knob acting on a threaded member and a counterthrust spring, which act laterally on the distance meter 102.

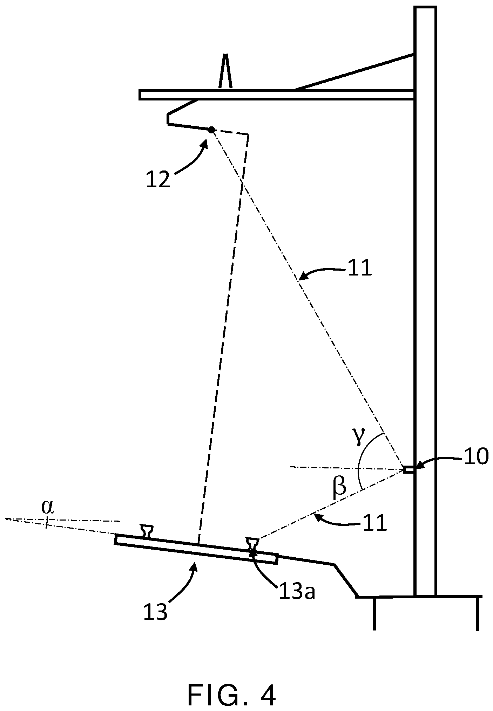

Figure 4 exemplifies position measurements carried out according to the method of the present invention, for measuring the position of a wire 12 of an electrical contact line associated with a railway track 13.

As already mentioned, the position measurement system 100 (not shown for the sake of simplicity) is positioned on the reference support 10, in this example a topographic pin 10. The position measurement system 100 projects the laser beam 11 emitted by the distance meter 102 already described.

Advantageously, the use of the topographic pin 10 makes it possible to exploit an infrastructure already available in the railway field. In fact, such topographic pins 10 are advantageously already in place on electric traction poles or other present products, which cannot be moved. Their use therefore aims to facilitate surveying operations, improve data accuracy and reduce costs.

The measurement method according to the present invention provides for sequentially collimating one of the rails 13a of the facing track 13 and the contact wire 12 of the power line, by detecting the inclined distances and the relative angles with respect to the horizontal. Preferably, the nearest rail 13a (in the example, on the right) is collimated but it would be possible to alternatively collimate the furthest rail (in the example, on the left).

Preferably, the controls of the position measurement system 100, the acquisition of survey data and the processing thereof is done on a computer device associated with a specific software.

Advantageously, the position measurement method of the present invention makes it possible to automatically calculate the height of the wire 12 of the contact line measured on the perpendicular to the rail plane on the axis of the track 13 and the associated "polygonation" offset, taking into account, in curve, the cross-level value of the track 13 defining the angle $\alpha$.

As already mentioned, in order to properly point an anchor clamp of the wire 12 of the electrical contact line, it is provided to properly direct laterally the measurement system 100.

In order to point the laser beam 11 at the target, suitable red filter glasses can be used, especially during the daytime, which significantly increase the visibility of laser beams and dots in bright environments and outdoors.

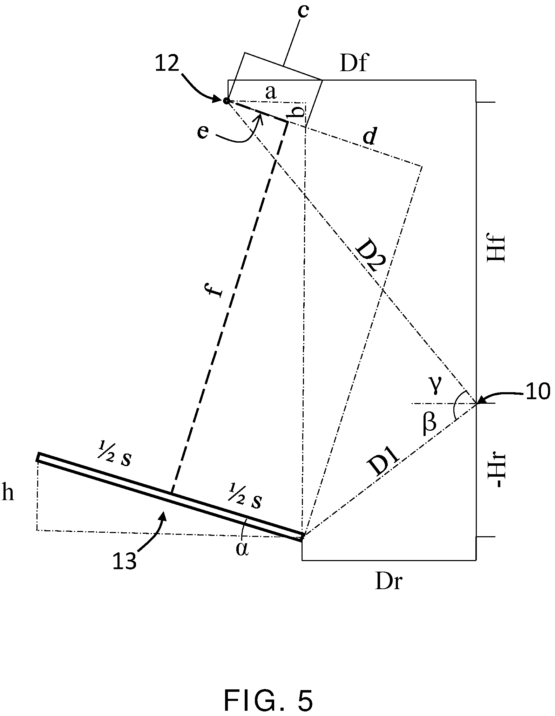

Figure 5 exemplifies the triangulation provided for by the position measurement method of the present invention to determine a height $f$ and a lateral offset $e$ of the wire 12 of a contact line associated with the track 13.

The measurement method provides for applying the measurement system 100 (not shown in Figure 5) to a reference support 10. In this example, the combination of measurement system 100 and reference support 10 are also ideally schematised as point-like; it is clear that the correct distances and angles can be derived minus appropriate deviations dictated by the geometries of the measurement system 100 and reference support 10 themselves.

The measurement method provides for measuring with the measurement system 100 a first distance $D1$ and a first angle $\beta$ between the reference support 10 and a portion of the railway track 13; preferably the portion of the railway track 13 corresponds to the head of one of the rails of the track, however schematised in a point-like manner in Figure 5.

In order to measure the first distance $D1$, therefore, the method provides for pointing the measurement system 100 below a horizontal plane passing through the reference support 10.

The measurement method provides for measuring with the measurement system 100 a second distance $D2$ and a second angle $\gamma$ between the reference support 10 and the wire 12.

In order to measure the second distance $D2$, therefore, the method provides for pointing the measurement system 100 above the horizontal plane passing through reference support 10.

The measurement method of the present invention provides for triangulating the first distance $D1$, the first angle $\beta$, the second distance $D2$ and the second angle $\gamma$ to determine a height $f$ of the wire 12 projected on an axis perpendicular with respect to a plane of the railway track 13, and further to determine a lateral offset $e$ of the wire 12 with respect to the perpendicular axis.

"Perpendicular axis" refers to an imaginary line intermediate to the rail track 13, which divides it into two equal halves; this imaginary line (or "axis") is perpendicular to the plane that includes the rail track 13.

Preferably, the measurement method provides for triangulating by appropriately assessing a gauge $s$ of the rail track, defined for example as the measurement between the inner edges of the rail head of the track.

Preferably, the measurement method provides for acquiring a transverse cross-level $h$ of the rail track 13, and provides for triangulating by assessing a third angle $\alpha$ associated with the transverse cross-level.

With the quantities defined above and the aid of Figure 5, a non-limiting triangulation that can be carried out according to the position measurement method of the present invention can now be exemplified; other triangulation modes are possible, configured according to the usual geometrical criteria.

Having measured the first distance $D1$, the first angle $\beta$, the second distance $D2$ and the second angle $\gamma$ according to the method of the invention, it is possible to determine the distances $Dr$ and $Hr$ of the track on the vertical and horizontal, and the distances $Df$ and $Hf$ of the wire on the vertical and horizontal. The angle $\alpha$ is generally known by design or can be determined by a suitable on-site measurement.

It derives that:

$$a = Df - Dr$$

$$b = a \cdot tg(\alpha)$$

$$c = a \, / \, cos(\alpha)$$

$$d = [Hf - (-Hr) - b] \cdot sen(\alpha)$$

Having calculated $a$, $b$, $c$ and $d$, it is possible to determine:

$$e = c + d - 1/2 \, s$$

$$f = d \, / \, tg(\alpha)$$

A special case of the above, which is particularly simple, is the track 13 placed on a plane, on a straight line and without transverse cross-level $h$ (thus with $\alpha = 0°$):

$$e = - Dr + Df - 1/2 \, s$$

$$f = Hf - (- Hr)$$

The above calculations are presented according to a convention whereby $e$ is positive if on the right of the perpendicular, and negative if on the left of the perpendicular. Other conventions are applicable.

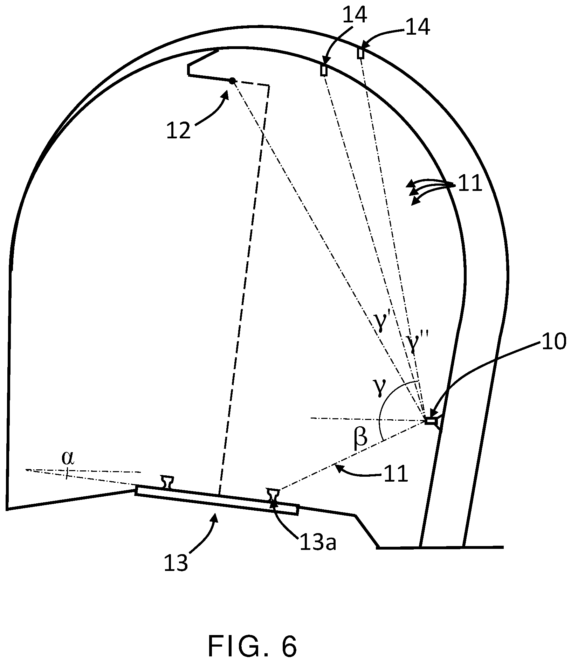

Figure 6 exemplifies further measurements according to the position measurement method for a wire of an electrical contact line associated with a railway track according to the present invention.

In certain applications, the measurement method provides to further measure, with the measurement system 100, a plurality of further distances and angles $\gamma'$, $\gamma''$ etc. between the reference support 10 and additional fixed references 14 applied for example to sections of a tunnel to determine position and movements thereof over time. Alternatively, fixed references could be applied to bridge sections, other structures, etc.

In fact, when there are, for example, fracture marks in tunnels between different sections of the civil engineering structure, which also depend on geological factors, it is advantageous to be able to verify how stabilised these are over time and how much the different movements of the sections affect the correct preservation of the position of the contact line in relation to the track. It should be noted that the contact line 12 is integrally anchored, e.g. to the vault of the different tunnel sections.

Thus, the method of the present invention makes it possible to detect from the reference support 10, not only the position of the wire 12 of the contact line with respect to the track 13, but also the position of other fixed references 14 on the civil engineering work, for example of both sections of a tunnel near a fracture, and to verify by difference of readings in time, the relative movements and alterations affecting the track 13 and the electrical contact line.

Industrial applicability

To summarise, the position measurement method for a wire of an electrical contact line associated with a railway track according to the present invention, and the associated position measurement system according to the present invention, make it possible to determine and verify the precise position of the wire of the electrical contact line with respect to the track, without interrupting railway traffic and without disconnecting the power supply, with considerable cost reduction and simultaneous improvement of safety conditions, wherein a single operator carries out the measurements from outside the track.

The verification of the correct position of the wire of the contact line in relation to the underlying track is a necessary condition to resume the railway traffic after maintenance or renewal work on both the track and the contact line with precise tolerances of height, polygonation and slope of both infrastructures.

Advantageously, the present invention does not require the installation of dedicated fixed brackets. Furthermore, advantageously, the present invention is completely operable from outside the tracks and therefore does not interfere with the encumbrance profile due to train traffic.

In view of the description given herein, the person skilled in the art will be able to devise further modifications and variations, in order to satisfy contingent and specific needs.

For example, specific markers could be provided to be associated with the track or the electrical contact line.

For example, additional modules could be associated with the measurement system, enabling further functionalities.

The embodiments described herein are therefore intended to be illustrative and non-limiting examples of the invention.

**Claims**

1. Position measurement method for a wire (12) of an electrical contact line associated with a railway track (13), said position measurement method comprising:

   - applying a measurement system (100) to a reference support (10), wherein said measurement system (100) comprises a distance meter (102) and an inclinometer;
   - measuring with said measurement system (100) a first distance (D1) and a first angle ($\beta$) between said reference support (10) and a portion of said railway track (13);
   - measuring with said measurement system (100) a second distance (D2) and a second angle ($\gamma$) between said reference support (10) and said wire (12);
   - triangulating said first distance (D1), said first angle ($\beta$), said second distance (D2) and said second angle ($\gamma$) to determine a height (f) of said wire (12) projected on an axis perpendicular with respect to a plane of said railway track (13), and further to determine a lateral offset (e) of said wire (12) with respect to said perpendicular.

2. Position measurement method according to claim 1, wherein triangulating further comprises an assessment of a gauge (s) of said railway track (13).

3. Position measurement method according to claim 1 or 2, further comprising acquiring a cross-level (h) of said railway track (13), wherein triangulating further comprises an assessment of a third angle ($\alpha$) associated with said cross-level (h).

4. Position measurement method according to any one of claims 1 to 3, wherein measuring said first distance (D1) comprises pointing said measurement system (100) below a horizontal plane passing through said reference support (10), and wherein measuring said second distance (D2) comprises pointing said measurement system (100) above said horizontal plane.

5. Position measurement method according to any one of claims 1 to 4, further comprising laterally directing said measurement system (100) to point an anchor clamp of said wire (12) of said electrical contact line.

6. Position measurement method according to any one of claims 1 to 5, further comprising measuring with said measurement system (100) a plurality of further distances and angles between said reference support and further fixed references applied to a civil work to determine position and movements over time.

**7.** Position measurement method according to any one of claims 1 to 6, wherein said reference support (10) includes a topographic pin, in particular a topographic pin already installed on railway lines to check the planimetric-altimetric status of said railway track.

**8.** Position measurement system (100) configured to implement the position measurement method for a wire (12) of an electrical contact line associated with a railway track (13) according to any one of claims 1 to 7.

**9.** Position measurement system according to claim 8, comprising centering means (101) to a reference support (10), a distance meter (102), an inclinometer, an elevation angle adjustment system (103) with respect to a horizontal plane.

**10.** Position measurement system according to claim 9, wherein said elevation angle adjustment system (103) comprises a slide mechanism comprising a first quick adjustment mechanism (103b) and a second precision adjustment mechanism (103c).

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 24 19 9937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 300 295 A (UNIV HUNAN) 3 February 2016 (2016-02-03) | 1,2,4-6, 8-10 | INV. B61L23/04 |
| A | * abstract * * paragraph [0005] - paragraph [0014] * * paragraph [0024] - paragraph [0028]; figures 1-3 * | 3,7 | B60M1/28 B61L27/53 B61K9/08 |
| | - - - - - | | |
| X | US 2015/124239 A1 (BRIAND EDMOND [FR]) 7 May 2015 (2015-05-07) * paragraph [0001] - paragraph [0013] * * paragraph [0022] - paragraph [0060]; claim 2; figures 2,3 * | 1-10 | |
| | - - - - - | | |
| X | JP 2007 240298 A (HIGASHI NIPPON RYOKAKU TETSUDO) 20 September 2007 (2007-09-20) | 1-3,5,6, 8-10 | |
| A | * abstract * * paragraph [0033] - paragraph [0036]; figures 1,3-6 * | 4,7 | |
| | - - - - - | | |
| X | CN 106 052 615 A (CHINA RAILWAY ELECTRIFICATION BUREAU GROUP CO LTD) 26 October 2016 (2016-10-26) * abstract * * paragraph [0051] - paragraph [0062]; figure 2 * | 1,2,6,8, 9 | **TECHNICAL FIELDS SEARCHED (IPC)** B61L B60M B61K |
| | - - - - - | | |
| A | WO 2022/258650 A1 (PISANI GIORGIO [IT]) 15 December 2022 (2022-12-15) * abstract * * page 8 * | 7 | |
| | - - - - - | | |

The present search report has been drawn up for all claims

| Place of search | Date of completion of the search | Examiner |
|---|---|---|
| Munich | 14 January 2025 | Pita Priegue, Miguel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9937

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| CN 105300295 | A | 03-02-2016 | NONE | | |
| US 2015124239 | A1 | 07-05-2015 | CA | 2873161 A1 | 14-11-2013 |
| | | | EP | 2847028 A2 | 18-03-2015 |
| | | | FR | 2990389 A1 | 15-11-2013 |
| | | | US | 2015124239 A1 | 07-05-2015 |
| | | | WO | 2013167840 A2 | 14-11-2013 |
| JP 2007240298 | A | 20-09-2007 | JP | 5068465 B2 | 07-11-2012 |
| | | | JP | 2007240298 A | 20-09-2007 |
| CN 106052615 | A | 26-10-2016 | NONE | | |
| WO 2022258650 | A1 | 15-12-2022 | EP | 4352453 A1 | 17-04-2024 |
| | | | WO | 2022258650 A1 | 15-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008129420 A2